# FASCICULE DE BREVET EUROPEEN

(11) **EP 3 209 822 B1**
(45) Date de publication et mention de la délivrance du brevet: **28.07.2021**
(21) Numéro de dépôt: 15785084.3
(22) Date de dépôt: 20.10.2015
(51) Int. Cl.: D04H 1/407, B01J 20/24, C02F 1/28, D04H 1/4266

(54) **UTILISATION D'UN TEXTILE COMPOSITE DE FIBRES NATURELLES ET/OU SYNTHÉTIQUES ET/OU ARTIFICIELLES ET DE PARTICULES LIGNO-CELLULOSIQUES POUR PIÉGER LES MÉTAUX ET/OU LES MÉTALLOÏDES ET/OU LES RADIONUCLÉIDES ET/OU LES FONGICIDES ET/OU LES HERBICIDES PRESENTS DANS L'EAU**
VERWENDUNG EINER VERBUNDTEXTILIE AUS NATÜRLICHEN UND/ODER SYNTHETISCHEN UND/ODER KUNSTFASERN UND LIGNOCELLULOSE-TEILCHEN ZUM EINFANGEN VON METALLEN UND/ODER METALLOIDEN UND/ODER RADIONUKLIDEN UND/ODER FONGIZIDEN UND/ODER HERBIZIDEN IN WASSER
USE OF A COMPOSITE TEXTILE OF NATURAL AND/OR SYNTHETIC AND/OR ARTIFICIAL FIBRES AND LIGNOCELLULOSE PARTICLES FOR TRAPPING THE METALS AND/OR METALLOIDS AND/OR RADIONUCLIDES AND/OR FONGICIDES AND/OR HERBICIDES PRESENT IN WATER

(30) Priorité: 20.10.2014 FR 1460092
(43) Date de publication de la demande: 30.08.2017
(73) Titulaire: PE@RL, 87068 Limoges (FR)
(72) Inventeur: JAUBERTY, Loïc, 87220 Aureil (FR); DEVOS, Philippe, 87000 Limoges (FR)
(74) Mandataire: Regimbeau
(86) Numéro de dépôt international: PCT/EP2015/074274
(87) Numéro de publication internationale: WO 2016/062723

(56) Documents cités:
- EP-A1- 0 584 004
- WO-A1-2006/096472
- WO-A1-2011/042671
- WO-A2-2007/030671
- WO-A2-2007/035672
- BE-A- 621 293
- FR-A1- 2 657 364
- None

## Description

L'invention concerne l'utilisation d'un textile composite comprenant plusieurs couches textiles imprégnées de particules ligno-cellulosiques capables d'adsorber les métaux (Cuivre, or, fer...) et/ou les radionucléides comme l'uranium et/ou les fongicides et/ou les herbicides.

L'invention s'inscrit dans le domaine du traitement des eaux, en particulier du traitement des eaux pour les débarrasser des métaux et/ou des radionucléides et/ou des fongicides et/ou des herbicides.

L'homme du métier a encore trop peu de solutions dans ce domaine, en particulier de solutions « vertes » c'est-à-dire limitant les impacts sur l'environnement.

Ce traitement est assuré aujourd'hui par des résines échangeuses d'ions, par des précipitations chimiques ou des charbons actifs. Même si ces méthodes présentent un taux de piégeage efficace, elles présentent également les inconvénients suivants : coût élevé, maintenance et entretien importants et production de boues.

Ces dispositifs ne permettent en outre en aucune façon de diminuer la quantité de déchets ni le recyclage des métaux piégés.

Par exemple, dans le domaine du traitement des eaux chargées en radioéléments, le volume des déchets (rejets chimiques et boues radioactives) est particulièrement crucial. Par exemple, dans le domaine des mines de métaux et en particulier de métaux précieux, la récupération des traces du métal dans les eaux peut être particulièrement lucrative. Le but de l'invention consiste à fournir un matériau, de préférence naturel, renouvelable, recyclable, biodégradable et incinérable pour le piégeage des métaux et/ou des radionucléides et/ou des fongicides et/ou des herbicides dans les eaux des lieux de leur extraction comme dans les lieux de leur utilisation.

On sait que les végétaux ont une propension particulière à absorber les métaux et les radionucléides.

WO2011042671 est une demande internationale de la Demanderesse qui décrit un procédé de traitement d'écorces pour améliorer leurs propriétés de piégeage des radionucléides.

WO 2007/035672 décrit une méthode de traitement de l'eau ou d'une surface solide comprenant la mise en contact de l'eau ou de la surface solide à traiter avec soit du fumier, soit une substance sous forme de feuille ayant une forte teneur en humate.

WO 2006/096472 divulgue une méthode de traitement d'eau par mise en contact de l'eau avec un matériau lignocellulosique pour éliminer les ions de métaux lourds ou précieux. EP 0 584 004 décrit un substrat biologique composé de matériau dit lignocellulosique pour l'adsorption de contaminants présents dans un milieu aqueux.

WO 2007/030671 divulgue un tapis géocomposite biorestaurant composé d'une bactérie et d'adsorbant tel que du charbon actif.

De manière surprenante, les inventeurs ont découvert que l'incorporation de granulats d'écorces de pin d'une taille appropriée et en une quantité suffisante dans un non-tissé naturel de fibres de lin et de PLA-maïs permet d'améliorer considérablement le piégeage des métaux contenus dans l'eau par lesdites écorces.

L'adsorption du textile de l'invention est particulièrement avantageuse par rapport aux granulats seuls, même par rapport aux granulats ensachés dans un textile en fibres naturelles.

### RESUME DE L'INVENTION

La présente invention concerne l'objet des revendications.

L'invention concerne l'utilisation d'un textile tissé ou non-tissé composite de fibres naturelles et/ou synthétiques et/ou artificielles et de particules ligno-cellulosiques enchevêtrées dans lesdites fibres comprenant plus de 30% en poids desdites particules ligno-cellulosiques
- lequel non-tissé est susceptible d'être obtenu par un procédé comprenant les étapes suivantes :
   a) Nappage d'un voile de carde desdites fibres avec dépôt de particules ligno-cellulosiques entre chaque couche de voile de carde,
   b) Pressage de l'ensemble obtenu à l'étape (a)
   c) Consolidation de l'ensemble obtenu à l'étape (b) par aiguilletage et/ou par thermoliage.
- lequel tissé est susceptible d'être obtenu par un procédé dans lequel les particules ligno-cellulosiques sont déposées dans le voile de carde qui est ensuite filé puis tissé pour traiter l'eau dans le but de piéger les métaux et/ou les radionucléides et/ou les fongicides et/ou les herbicides qu'elle contient.

### DEFINITIONS

On entend par « ligno-cellulosique » tout matériau issu de végétal ligneux composé de lignine, d'hémicellulose et de cellulose en proportions variables comme des écorces, par exemple des écorces de pin, de châtaignier, par exemple de déchets de scierie, par exemple de la sciure, par exemple des déchets de l'agriculture, par exemple de la fibre de noix de coco.

On entend par « enchevêtré » mêlé les uns aux autres de manière désordonnée, i.e. disposé au sein des fibres selon la présente invention de manière aléatoire et dont la cohésion est assurée uniquement par la manière dont sont disposées les particules (pas de traitement chimique).

Au sens de la présente invention, on entend par « particule » un morceau quelle que soit sa forme qui est un constituant additionnel du textile et qui ne participe pas à la trame du textile. Le textile est constitué de fibres auxquelles sont ajoutées les particules de la présente invention.

On entend par « fibre naturelle » une fibre végétale ou animale apte à être utilisée dans l'industrie textile de par ses propriétés « textiles » naturelles sans subir un traitement physico-chimique modifiant profondément ses caractéristiques (longueur, souplesse, etc ...).

On entend par « fibre synthétique » toute fibre de synthèse, par exemple par décomposition, polymérisation, extrusion..., fabriquées à partir de polymères artificiels, par exemple de type polyester, polyamide ou polypropylène.

On entend par « fibre artificielle » une fibre synthétique d'origine végétale ou animale fabriquée par l'homme par modification d'une matière première naturelle comme les fibres PLA, la cellulose, les fibres à base de chitine de carapace de crustacés.

On entend par « fibre minérale » une fibre naturelle directement issue de la roche, comme par exemple l'amiante, la wollastonite ou la sépiolite, ou une fibre artificielle telle que la fibre de verre, la laine de verre, la laine de roche, la fibre céramique ou la fibre l'alumine. On entend par « biodégradable » décomposable en éléments divers dépourvus d'effets dommageables sur le milieu naturel sous l'action d'organismes vivants extérieurs à sa substance.

On entend par « textile » un textile tissé ou non-tissé.

Un « textile non-tissé » ou « non-tissé » est un produit manufacturé, constitué d'un voile, d'une nappe ou d'un matelas de fibres qu'elles soient réparties directionnellement ou par hasard, et dont la cohésion interne est assurée par des méthodes mécaniques et/ou physiques, et/ou chimiques et/ou par combinaison de ces divers procédés, à l'exclusion du tissage et du tricotage. Selon la définition ISO 9092, les non-tissés sont des fibres orientées de manière aléatoire ou directionnelle transformées sous forme de voile ou de format, consolidées et liées par friction, et/ou cohésion et/ou adhésion.

On entend par "fibres animales" toute fibre animale naturelle ou artificielle d'origine animale.

Parmi les fibres animales naturelles, on peut citer les poils d'animaux comme la laine de mouton, la laine alpaga, la laine angora, le cachemire, la laine de chameau, le crin animal, la laine mohair la laine de yak ou encore la soie.

Parmi les fibres artificielles d'origine animale, on peut citer les fibres à base de carapace de crustacé.

On entend par "fibres végétales" toute fibre végétale naturelle ou artificielle d'origine végétale.

Parmi les fibres végétales naturelles, on peut citer les fibres de chanvre, de coton, en particulier de coton biologique, de lin, la jute, le kapok, le kenaf, les fibres de ramie, le sisal.

Parmi les fibres artificielles d'origine végétale, on peut citer toute fibre obtenue à partir d'un matériau cellulosique comme la viscose de bambou, la fibre PLA, la viscose de soja, les fibres à base de pulpe de bois, les fibres à base d'algues séchées.

On entend par « taille » de particule la mesure la plus élevée des trois dimensions de la particule, par exemple le diamètre pour une particule sphérique, la longueur pour une aiguille ou un parallélépipède.

On entend par « métalloïde » un élément chimique qui ne peut être classé ni dans les métaux ni dans les non-métaux, possédant des propriétés intermédiaires entre métal et non-métal. Le métalloïde selon l'invention peut être le bore, le silicium, le germanium, l'arsenic, l'antimoine, le tellure ou l'astate, et est de préférence l'arsenic.

### FIGURES

Figure 1 : Suivi des concentrations en cuivre en fonction du volume de solution passé au travers de chaque produit :
   ■ Particules ligno-cellulosiques seules
   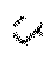 Particules ligno-cellulosiques en sac
   = Fibres seules
   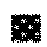 Non tissé selon invention
   **Ordonnée : Concentration en cuivre en sortie de colonne (mg/L)**
   **Abscisse : Volume de solution passé au travers de la colonne (L)**
Figure 2 : Pourcentage de cuivre non retenu en sortie de colonne en fonction du volume de solution passé au travers de chaque produit :
   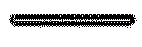 Particules ligno-cellulosiques seules
   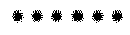 Particules ligno-cellulosiques en sac
   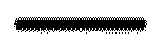 Fibres seules
   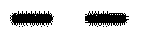 Non tissé selon invention
   **Ordonnée : Pourcentage de cuivre non retenu en sortie de colonne**
   **Abscisse : Bed Volume passés**
Figure 3 : Pourcentage de cuivre retenu en sortie de colonne en fonction du volume de solution passé au travers de chaque produit :
   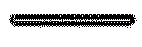 Particules ligno-cellulosiques seules
   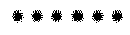 Particules ligno-cellulosiques en sac
   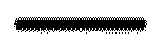 Fibres seules
   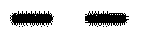 Non tissé selon invention
   **Ordonnée : Pourcentage de cuivre retenu en sortie de colonne**
   **Abscisse : Bed Volume passés**
Figure 4 : Pourcentage de cuivre moyen non retenu en sortie de colonne en fonction du volume de solution passé au travers de chaque produit :
   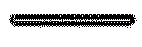 Particules ligno-cellulosiques seules
   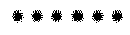 Particules ligno-cellulosiques en sac
   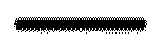 Fibres seules
   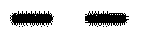 Non tissé selon invention
   **Ordonnée : Pourcentage de cuivre moyen non retenu**
   **Abscisse : Bed Volume passés**
Figure 5 : Pourcentage de cuivre moyen retenu en sortie de colonne en fonction du volume de solution passé au travers de chaque produit :
   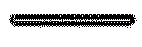 Particules ligno-cellulosiques seules
   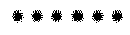 Particules ligno-ceilulosiques en sac
   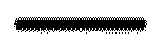 Fibres seules
   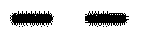 Non tissé selon invention
   **Ordonnée** : **Pourcentage de cuivre moyen retenu**
   **Abscisse : Bed Volume passés**

### DESCRIPTION DETAILLEE

La présente invention concerne l'utilisation d'un textile pour traiter de l'eau dans le but de piéger les métaux et/ou les radionucléides et/ou les fongicides et/ou les herbicides qu'elle contient, caractérisé en ce qu'il s'agit d'un textile tissé ou non-tissé composite de fibres naturelles et/ou synthétiques et/ou artificielles et de particules ligno-cellulosiques enchevêtrées dans lesdites fibres comprenant plus de 30% en poids desdites particules ligno-cellulosiques
- lequel non-tissé est susceptible d'être obtenu par un procédé comprenant les étapes suivantes :
   a) Nappage d'un voile de carde desdites fibres avec dépôt de particules ligno-cellulosiques entre chaque couche de voile de carde,
   b) Pressage de l'ensemble obtenu à l'étape (a)
   c) Consolidation de l'ensemble obtenu à l'étape (b) par aiguilletage et/ou par thermoliage.
- lequel tissé est susceptible d'être obtenu par un procédé dans lequel les particules ligno-cellulosiques sont déposées dans le voile de carde qui est ensuite filé puis tissé.

Ces métaux et/ou radionucléides et/ou fongicides et/ou herbicides peuvent être présents dans l'eau en toute quantité, même sous forme de traces.

Parmi les métaux, on comprend le plomb, nickel, chrome, zinc, cuivre, or, argent, fer, mercure, cadmium.

Parmi les métalloïdes, on comprend le bore, le silicium, le germanium, l'arsenic, l'antimoine, le tellure et l'astate, de préférence l'arsenic.

Parmi les radionucléides, on comprend l'uranium, le plutonium, le palladium, l'américium, le polonium, le radium, le césium sous leurs différentes formes isotopes. Parmi les biocides, on peut citer les pesticides, les antiparasitaires et les antibiotiques. Parmi les pesticides, on peut notamment citer les insecticides, les fongicides, les herbicides, les parasiticides, les antimicrobiens, les algicides, les acaricides, les antimicrobiens, les bactéricides, les corvicides, les molluscicides, les nématicides, les ovicides, les rodenticides, les taupicides, les virucides, les produits répulsifs, et les biopesticides.

Parmi les herbicides, on peut notamment citer les désherbants sélectifs, les désherbants totaux, les débroussaillants, les défanants, les anti-germes, et les silvicides. L'utilisation selon l'invention peut avoir lieu dans certaines mines d'extraction ou dans certaines industries de transformation des métaux, ou dans des sites d'utilisation des radionucléides, ou des fongicides et/ou des herbicides.

L'utilisation selon l'invention concerne aussi bien les eaux potables que les eaux provenant des océans, mers, fleuves, lacs, étangs, retenues, rivières et cours d'eau, les eaux d'infiltration du sol sur les sites de pollution industrielles et les lixiviats.

L'utilisation selon l'invention consiste à utiliser le textile comme un filtre. Pour chaque application, le textile est placé de sorte que l'eau à traiter le traverse et les métaux et/ou radionucléides et/ou fongicides et/ou herbicides qu'elle contient y soient piégés.

A titre d'exemple, certaines applications sont les suivantes :
- Fixation des radionucléides dans les bassins de décontamination des centrales nucléaires. Le textile est alors maintenu dans les bassins de décontamination.
- Fixation du cuivre avant pénétration dans le sol des terres viticoles après traitement au cuivre, par exemple à la bouillie bordelaise. Le textile est alors déposé sur ou dans le sol.
- Fixation de métal, par exemple de métal précieux comme de l'or dans les eaux d'infiltration du sol des mines d'extraction.
- Fixation de métal, notamment du fer dans les lixiviats d'épuration des décharges.
- Récupération des produits phytosanitaires en agriculture soit lors de ruissellements après épandage, soit lors du lavage du matériel.

Le textile utilisé dans la présente invention est un textile composite de fibres naturelles et/ou synthétiques et/ou artificielles et de particules ligno-cellulosiques enchevêtrées entre lesdites fibres comprenant plus de 30% en poids desdites particules. Avantageusement, le textile est biodégradable.

Préférentiellement, les particules sont enchevêtrées dans lesdites fibres uniquement grâce aux étapes mécaniques de fabrication dudit textile. Aucun additif de type liant ou résine n'est utilisé pour créer des liaisons entre les particules et les fibres. La taille des particules est suffisamment petite pour offrir une surface de contact importante pour l'adsorption et donc générer une capacité de traitement optimale.

La taille des particules est suffisamment grande pour permettre leur tenue entre les fibres. La taille des particules est donc comprise entre 0,1 et 10 mm, de préférence entre 0,2 et 4 mm, de manière particulièrement préférée entre 0,4 et 3 mm. Avantageusement, la taille des particules est inférieure à 1 mm.

Avantageusement, le textile comprend 30 à 80%, de préférence 40 à 75% en poids de particules ligno-cellulosiques par rapport au poids total du textile, de manière particulièrement préférée 50% à 70%.

Avantageusement, le textile comprend 20 à 80%, de préférence 20 à 60% en poids de fibres par rapport au poids total du textile, de manière particulièrement préférée 30 à 50%. L'épaisseur du textile est comprise entre 3 et 20 mm, de préférence entre 8 et 15 mm. Le poids du textile est compris entre 0,1 et 2 kg/m², de préférence entre 0,8 et 1,5 kg/m². De préférence, le textile est un non-tissé.

Selon un mode de réalisation, les fibres du textile selon l'invention sont des fibres naturelles et/ou artificielles.

Selon un mode de réalisation, l'ensemble des fibres du textile est constitué de fibres végétales.

De préférence, les fibres du textile sont exclusivement des fibres de lin et des fibres PLA. La matière utilisée pour la fabrication de fibres PLA est l'amidon de maïs. Celui-ci est transformé en sucre qui par décomposition grâce à des micro-organismes devient de l'acide lactide. Cet acide est polymérisé pour devenir du polylactide puis extrudé pour fabriquer la fibre PLA.

Selon un autre mode de réalisation, les fibres du textile sont des fibres naturelles, de préférence des fibres naturelles végétales, et préférentiellement exclusivement des fibres de lin.

Selon un mode de réalisation, le textile est fonctionnalisé, par exemple par du permanganate de manganèse ou du dioxyde de manganèse MnO₂.

Selon un autre mode de réalisation, les fibres du textile sont des fibres synthétiques. Avantageusement, les fibres synthétiques peuvent être choisies dans le groupe constitué des polyesters, des polyamides, des polypropylènes, et leurs mélanges.

Selon un autre mode de réalisation, les fibres du textile sont des fibres artificielles. Avantageusement, les fibres artificielles peuvent être d'origine animale, d'origine végétale ou d'origine minérale.

Avantageusement, les fibres artificielles peuvent être sélectionnées dans le groupe constitué des viscoses comme la viscose de soja, des fibres PLA, des fibres à base de cellulose, des fibres à base de chitine de carapace de crustacés, des fibres à base de bambou, des fibres à base de pulpe de bois, des fibres à base d'algues séchées, et leurs mélanges de préférence, les fibres artificielles sont choisies dans le groupe constitué des viscoses.

Avantageusement, les fibres synthétiques et/ou artificielles sont biodégradables, partiellement biodégradables ou non biodégradables.

Selon un mode de réalisation, une partie des fibres naturelles et/ou artificielles du textile peuvent être des fibres minérales.

Avantageusement, les fibres minérales peuvent être des fibres minérales naturelles telles que l'amiante, ou des fibres minérales artificielles telles que la fibre de céramique, la fibre de verre, ou les fibres de métaux.

Selon un mode de réalisation, le textile comprend au moins 50% en poids de fibres naturelles, par rapport au poids total des fibres dans le textile selon l'invention, de préférence au moins 70% en poids, plus préférentiellement au moins 80% en poids. Selon un mode de réalisation, le textile comprend au moins 50% en poids de fibres synthétiques, par rapport au poids total des fibres dans le textile selon l'invention, de préférence au moins 70% en poids, plus préférentiellement au moins 80% en poids.

Selon un mode de réalisation, le textile comprend au moins 50% en poids de fibres artificielles, par rapport au poids total des fibres dans le textile selon l'invention, de préférence au moins 70% en poids, plus préférentiellement au moins 80% en poids. Selon un mode de réalisation, le textile comprend au moins 50% en poids de fibres naturelles et/ou artificielles, par rapport au poids total des fibres dans le textile selon l'invention, de préférence au moins 70% en poids, plus préférentiellement au moins 90% en poids.

Selon un mode de réalisation, le textile comprend au moins 50% en poids de fibres végétales, par rapport au poids total des fibres dans le textile selon l'invention, de préférence au moins 70% en poids, plus préférentiellement au moins 80% en poids.

Le textile utilisé pour le piégeage des métaux et/ou des radionucléides et/ou des fongicides et/ou des herbicides selon l'invention peut être préparé selon un procédé comprenant les étapes suivantes.

Selon le premier mode de réalisation suivant, ce procédé de fabrication est approprié à la fabrication d'un non-tissé.

Les fibres sont dans un premier temps démêlées par le procédé de cardage.

Le voile ainsi obtenu est alors empilé par une opération de nappage puis pressé puis consolidé par aiguilletage et/ou par thermoliage.

L'opération de nappage consiste à empiler les voiles de fibres cardées pour obtenir l'épaisseur de nappe souhaitée.

Le thermoliage consiste en un passage au four après le passage en presse. Le thermoliage nécessite la présence dans le voile de fibres thermofusibles. Le thermoliage est un procédé de consolidation de la nappe qui fait appel aux propriétés thermoplastiques de certaines fibres rentrant dans la composition du voile. Sous l'effet de la chaleur les fibres thermofusibles (dont le point de fusion est plus bas que celui des autres fibres constituant la nappe) fondent et assurent ainsi la liaison de toutes les fibres entre elles.

L'aiguilletage consiste à emmêler des fibres textiles entre elles et éventuellement dans un tissu, au moyen d'aiguilles spéciales portant des barbelures ou au moyen de jets hydrauliques (aiguilletage hydraulique). L'aiguilletage permet d'enchevêtrer les fibres constituant la nappe non-tissée au moyen d'aiguilles spéciales ou de jets hydrauliques qui créent des ponts de fibres verticaux entre les différents voiles afin de les maintenir ensemble et assurer ainsi la tenue du produit fini.

Dans le cas d'un aiguilletage, le nombre de perforations généralement pratiqué se situe dans un domaine de 30 à 200 perforations par cm², et couramment autour de 150 perforations par cm².

Les particules ligno-cellulosiques sont déposées entre deux couches de voiles de fibres cardées non-tissées pendant le nappage.

En présence de fibres thermofusibles, le procédé de l'invention favorisera le thermoliage plutôt que l'aiguilletage.

En l'absence de fibres thermofusibles, l'aiguilletage est utilisé, éventuellement suivi d'un passage à température élevée. Ce passage à température élevée peut durer de quelques minutes à 30 minutes environ, de préférence de 5 à 15 minutes. On entend par « température élevée » une température supérieure à 100°C.

Selon le second mode de réalisation suivant, le procédé de fabrication est approprié à la fabrication d'un textile tissé utilisé selon l'invention.

Les particules ligno-cellulosiques sont alors soit :
- déposées dans le voile de carde qui est ensuite filé puis tissé ou tricoté
- incorporées dans les fils au moment du filage, puis les fils sont tissés ou tricotés
- incorporées au moment du tissage ou du tricotage.

Selon un mode de réalisation particulier de l'invention, les particules ligno-cellulosiques sont traitées avant leur incorporation dans le tissé ou non-tissé pour optimiser leur capacité de piégeage des métaux et/ ou radionucléides et/ou fongicides et/ou herbicides. Les étapes de ce mode de réalisation sont les suivantes.

La première étape de traitement des particules est une étape de rinçage, lavage, élimination des fines résiduelles après l'étape de broyage et après les différents transferts et stockages. Certains composés hydrosolubles comme les tannins ou autres composés phénoliques sont partiellement relargués dans l'eau de lavage et simultanément les écorces absorbent de l'eau, provoquant un gonflement par hydratation. Les particules ainsi pré-préparées sont ensuite activées pour leur conférer des fonctionnalités échangeuses d'ions. Une solution de solubilisation des tannins et des composés phénoliques est employée. L'ordre de ces deux traitements étant sans importance. L'activation des particules est obtenue de façon connue par un traitement acide, en l'occurrence de l'acide nitrique à 0,1 M, c'est-à-dire à 0,1 mole par litre. L'acide provoque des échanges des sels Na, K, Ca et P pour citer les principaux composés des sites échangeurs d'ions par des protons H. Le suivi est obtenu par une mesure de la conductivité en fonction du pH.

Le temps de traitement est défini lorsque la conductivité atteint une asymptote horizontale, généralement lorsque la solution atteint une acidité maximale, c'est-à-dire un pH de l'ordre de 1, la conductivité pouvant atteindre des valeurs de 40 µs/cm environ. Les particules sont ensuite rincées de nouveau pour éliminer la solution acide. De ce fait, les particules retrouvent un pH proche de 7 donc de la neutralité. Simultanément, la conductivité revient à la conductivité de l'eau distillée. Durant cette phase, les composés hydrosolubles sont encore éliminés. Néanmoins, il subsiste des composés hydrosolubles et ces derniers ne doivent plus être relargués ultérieurement lors de l'utilisation du produit fini à des fins de traitement de fluides, notamment d'eau en vue de la récupération des métaux, notamment les métaux lourds, et/ou des radionucléides et/ou des fongicides et/ou des herbicides. Ainsi, il faut stabiliser les particules ainsi activées et prêtes à être utilisées pour éviter tout relargage ultérieur de composés hydrosolubles.

Une solution de solubilisation consiste à traiter lesdites particules en leur faisant subir une réaction d'oxydation dite d'oxydation de Fenton. Cette réaction d'oxydation provoque une diminution de la taille des tannins ou autres composés phénoliques, les rendant ainsi aisément solubles. Ces composés solubles sont alors éliminés dans les eaux de lavage, interdisant leur solubilisation ultérieure lors des phases de filtration en vue de retenir des radionucléides et/ou des métaux lourds et/ou les métalloïdes et/ou des biocides puisque ces composés hydrosolubles sont absents. Ce traitement de solubilisation fait appel à la réaction d'oxydation de Fenton. Cette réaction est illustrée ci-dessous :

Fe²⁺ + H₂O₂ = Fe³⁺ +OH⁻ +•OH

Ainsi, on constate que cette réaction permet l'ouverture des cycles, la diminution de la taille des molécules, permettant alors leur solubilisation et leur élimination dans les eaux de lavage lors de la préparation des écorces. De plus, cette réaction provoque l'ouverture des cycles benzéniques des lignines pour former des groupements carboxyles et ainsi augmenter le nombre de sites disponibles pour l'adsorption.

Les exemples suivants illustrent l'invention sans en limiter la portée.

### EXEMPLES

### Exemple 1 : Préparation de particules d'écorces

Des écorces de pin Douglas sont broyées en granules de dimension inférieure à 10 mm.

### Exemple 2 : Fabrication d'un non-tissé composite selon l'invention

Des fibres de lin sont cardées. Le voile ainsi obtenu est alors empilé par nappage. Entre chaque couche de voile sont déposés des granules obtenus selon l'Exemple 1 à raison de 50% de fibres de lin pour 50% de granules en poids.

L'ensemble est ensuite pressé puis aiguilleté puis passé au four à 160°C, 10 min.

### Exemple 3 : Fabrication d'un non-tissé composite selon l'invention

Des fibres de lin et de PLA sont cardées. Le voile ainsi obtenu est alors empilé par nappage. Entre chaque couche de voile sont déposés des granules obtenus selon l'Exemple 1 à raison de 25% de fibres de lin, 25% de fibres PLA pour 50% de granules en poids.

L'ensemble est ensuite pressé puis consolidé par thermoliage.

Le non-tissé composite obtenu présente une épaisseur de 5 mm pour un poids de 600 g/m².

### Exemple 4 : Caractérisation des capacités d'adsorption du cuivre du produit de l'exemple 3

### But

Le but est de caractériser les capacités d'adsorption en éléments traces métalliques (ETMs) du matériau en fonction de son conditionnement. Trois configurations sont testées : des écorces en vrac, des écorces ensachées et le tissu non-tissé composite selon l'invention.

### Principe

Dans les 3 cas testés, 20 mL (volume apparent du produit), soit environ 3 g de produit sont conditionnés en colonne. Une solution, dont la concentration en ETM à tester est connue, est percolée au travers de cette colonne et une mesure est effectuée régulièrement en sortie pour vérifier l'efficacité du traitement.

### Protocole d'essai sur le cuivre

La solution d'ETM ici utilisée présente une concentration initiale en cuivre de 3 mg/L. Cet élément, en plus d'être un polluant potentiel à traiter, présente l'intérêt d'être facilement dosable et est représentatif de nombreux autres polluants cationiques divalents. Une mesure en sortie de colonne est réalisée tous les 25 Bed Volume (BV), c'est à dire tous les 500 mL dans notre cas, le volume de lit étant égal à 20 mL.

Les résultats sont comparés avec ceux obtenus pour l'adsorption de l'uranium dont la concentration était de 0,3 mg/L.

Pour une question d'homogénéité, tous les résultats sont présentés comme s'ils avaient été réalisés à une concentration de 0,3 mg/L, c'est-à-dire que les volumes passés avec le cuivre ont été multipliés par 10 pour compenser la concentration 10 fois plus élevée en solution, ce qui équivaut à la même quantité d'élément fixé.

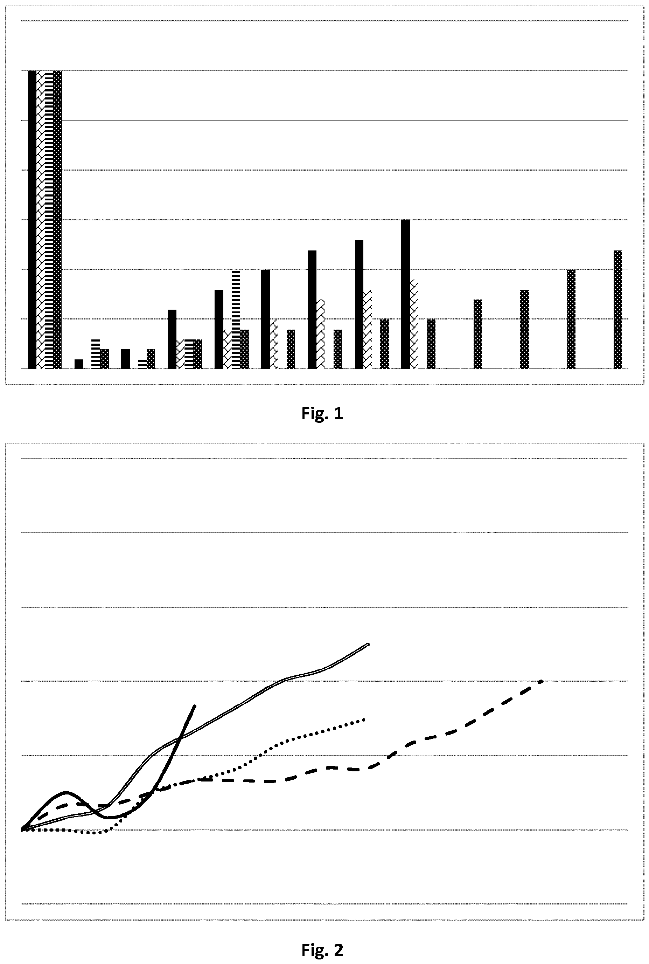

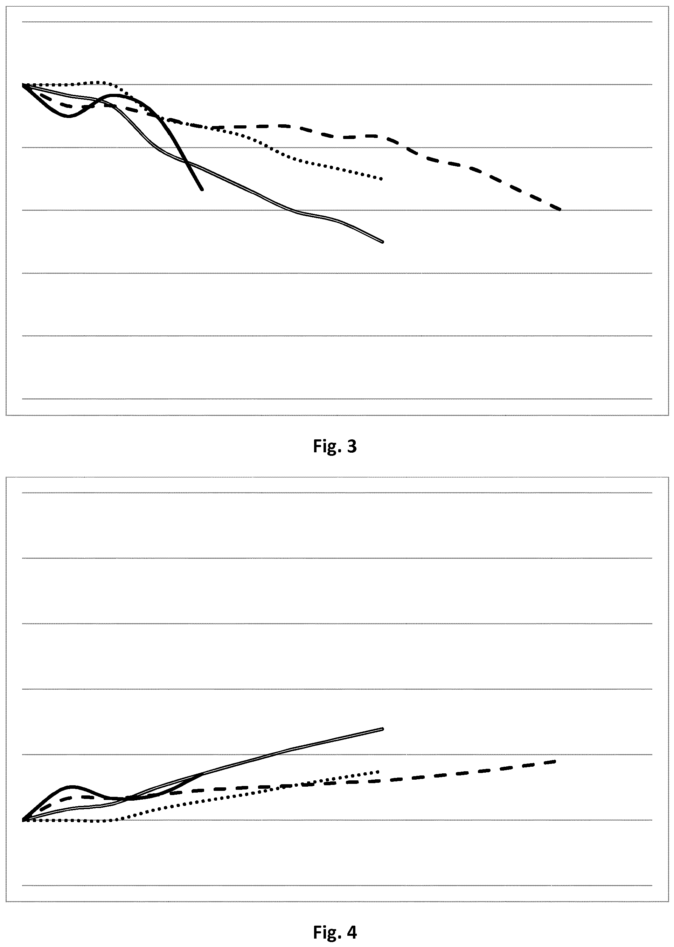

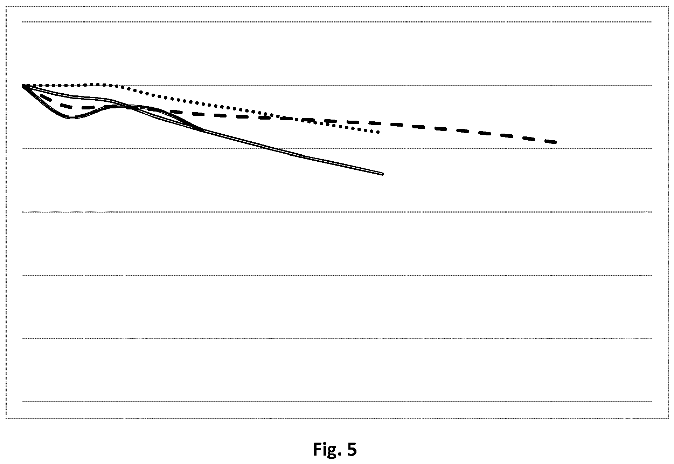

Les résultats de rendement de fixation sont présentés aux figures 1 à 5 :
La configuration vrac est en trait double, la configuration ensachée est en pointillés et la configuration selon l'invention est en tirets.

On observe que si on se réfère au rendement de fixation comme critère d'efficacité, la configuration selon l'invention permet de traiter un volume d'effluent au moins 2 fois plus important pour une qualité d'eau en sortie identique.

## Revendications

1. Utilisation d'un textile tissé ou non-tissé composite de fibres naturelles et/ou synthétiques et/ou artificielles et de particules ligno-cellulosiques enchevêtrées entre lesdites fibres comprenant plus de 30% en poids desdites particules ligno-cellulosiques,
- lequel non-tissé est susceptible d'être obtenu selon les étapes a) à c)
a) Nappage d'un voile de carde desdites fibres avec dépôt de particules ligno-cellulosiques entre chaque couche de voile de carde,
b) Pressage de l'ensemble obtenu à l'étape (a)
c) Consolidation de l'ensemble obtenu à l'étape (b) par aiguilletage et/ou par thermoliage.
- lequel tissé est susceptible d'être obtenu par un procédé dans lequel les particules ligno-cellulosiques sont déposées dans le voile de carde qui est ensuite filé puis tissé
pour traiter de l'eau dans le but de piéger les métaux et/ou les radionucléides et/ou les fongicides et/ou les herbicides qu'elle contient.

2. Utilisation selon la revendication 1, dans laquelle la taille des particules ligno-cellulosiques est comprise entre 0,4 et 3 mm, de préférence inférieure à 1 mm.

3. Utilisation selon l'une quelconque des revendications 1 à 2, dans laquelle le textile comprend 30 à 80%, de préférence 40 à 75% en poids de particules par rapport au poids total du textile.

4. Utilisation selon l'une quelconque des revendications 1 à 3, dans laquelle le textile comprend 20 à 80%, de préférence 30 à 50% en poids de fibres par rapport au poids total du textile.

5. Utilisation selon l'une quelconque des revendications 1 à 4, dans laquelle le textile a une épaisseur comprise entre 3 et 20 mm, de préférence entre 8 et 15 mm.

6. Utilisation selon l'une quelconque des revendications 1 à 5, dans laquelle le textile a un poids compris entre 0,1 et 2 kg/m², de préférence entre 0,8 et 1,5 kg/m².

7. Utilisation selon l'une quelconque des revendications 1 à 6, dans laquelle les fibres sont constituées de fibres végétales.

8. Utilisation selon l'une quelconque des revendications 1 à 7, **caractérisée en ce que** le textile est biodégradable.

9. Utilisation selon l'une quelconque des revendications 1 à 8 dans laquelle les fibres sont constituées de fibres naturelles et/ou artificielles.

10. Utilisation selon l'une quelconque des revendications 1 à 6, dans laquelle les fibres sont constituées de fibres synthétiques.

11. Utilisation selon l'une quelconque des revendications 1 à 9, lesdits métaux étant choisis parmi le groupe constitué du plomb, nickel, chrome, zinc, cuivre, or, argent, fer.

12. Utilisation selon l'une quelconque des revendications 1 à 10, lesdits radionucléides étant choisis parmi le groupe constitué de l'uranium, le plutonium, le palladium, l'américium.

## Patentansprüche

1. Verwendung eines Verbundtextilgewebes oder Verbundtextilvlieses aus natürlichen und/oder synthetischen und/oder künstlichen Fasern und lignocellulosehaltigen Teilchen, die zwischen diesen Fasern verwoben sind, umfassend mehr als 30 Gew.-% dieser lignocellulosehaltigen Teilchen,
- wobei das Vlies gemäß den Schritten a) bis c) erhalten werden kann:
a) Beschichten eines Krempelvlieses aus den Fasern mit Ablagerung von lignocellulosehaltigen Teilchen zwischen jeder Schicht des Krempelvlieses,
b) Pressen der in Schritt (a) erhaltenen Anordnung,
c) Verfestigen der in Schritt (b) erhaltenen Anordnung durch Vernadelung und/oder durch Thermobonding,
- wobei das Gewebe durch ein Verfahren erhalten werden kann, bei dem die lignocellulosehaltigen Teilchen in das Krempelvlies eingebracht werden, das anschließend gesponnen und gewebt wird,
zur Behandlung von Wasser, um darin enthaltene Metalle und/oder Radionuklide und/oder Fungizide und/oder Herbizide einzufangen.

2. Verwendung nach Anspruch 1, wobei die Größe der lignocellulosehaltigen Teilchen zwischen 0,4 und 3 mm, vorzugsweise weniger als 1 mm, beträgt.

3. Verwendung nach einem der Ansprüche 1 bis 2, wobei das Textilerzeugnis 30 bis 80 Gew.-%, vorzugsweise 40 bis 75 Gew.-%, Teilchen, bezogen auf das Gesamtgewicht des Textilerzeugnisses, enthält.

4. Verwendung nach einem der Ansprüche 1 bis 3, wobei das Textilerzeugnis 20 bis 80 Gew.-%, vorzugsweise 30 bis 50 Gew.-%, Fasern, bezogen auf das Gesamtgewicht des Textilerzeugnisses, enthält.

5. Verwendung nach einem der Ansprüche 1 bis 4, wobei das Textilerzeugnis eine Dicke zwischen 3 und 20 mm, vorzugsweise zwischen 8 und 15 mm, aufweist.

6. Verwendung nach einem der Ansprüche 1 bis 5, wobei das Textilerzeugnis ein Gewicht zwischen 0,1 und 2 kg/m², vorzugsweise zwischen 0,8 und 1,5 kg/m², aufweist.

7. Verwendung nach einem der Ansprüche 1 bis 6, wobei die Fasern aus pflanzlichen Fasern bestehen.

8. Verwendung nach einem der Ansprüche 1 bis 7, **dadurch gekennzeichnet, dass** das Textilerzeugnis biologisch abbaubar ist.

9. Verwendung nach einem der Ansprüche 1 bis 8, wobei die Fasern aus Natur- und/oder Kunstfasern bestehen.

10. Verwendung nach einem der Ansprüche 1 bis 6, wobei die Fasern aus synthetischen Fasern bestehen.

11. Verwendung nach einem der Ansprüche 1 bis 9, wobei die Metalle ausgewählt sind aus der Gruppe bestehend aus Blei, Nickel, Chrom, Zink, Kupfer, Gold, Silber, Eisen.

12. Verwendung nach einem der Ansprüche 1 bis 10, wobei die Radionuklide ausgewählt sind aus der Gruppe bestehend aus Uran, Plutonium, Palladium, Americium.

## Claims

1. Use of a woven or nonwoven composite textile consisting of natural and/or synthetic and/or artificial fibers and lignocellulosic particles entangled between said fibers comprising more than 30% by weight of said lignocellulosic particles,
- which nonwoven material can be obtained according to steps a) to c)
a) napping a card web of said fibers with deposition of lignocellulosic particles between each card web layer,
b) pressing the whole obtained in step (a),
c) consolidating the whole obtained in step (b) by needling and/or thermobonding.
- which woven material can be obtained by a process wherein the lignocellulosic particles are deposited in the card web which is then spun and then woven
to treat water in order to trap metals and/or radionuclides and/or fungicides and/or herbicides contained therein.

2. Use as claimed in claim 1, wherein the size of the lignocellulosic particles is comprised between 0.4 and 3 mm, preferably less than 1 mm.

3. Use as claimed in any one of claims 1 to 2, wherein the textile comprises 30 to 80%, preferably 40 to 75% by weight of particles in relation to the total weight of the textile.

4. Use as claimed in any one of claims 1 to 3, wherein the textile comprises 20 to 80%, preferably 30 to 50% by weight of fibers in relation to the total weight of the textile.

5. Use as claimed in any one of claims 1 to 4, wherein the textile has a thickness comprised between 3 and 20 mm, preferably between 8 and 15 mm.

6. Use as claimed in any one of claims 1 to 5, wherein the textile has a weight comprised between 0.1 and 2 kg/m², preferably between 0.8 and 1.5 kg/m².

7. Use as claimed in any one of claims 1 to 6, wherein the fibers consist of plant fibers.

8. Use as claimed in any one of claims 1 to 7, **characterized in that** the textile is biodegradable.

9. Use as claimed in any one of claims 1 to 8, wherein the fibers consist of natural and/or artificial fibers.

10. Use as claimed in any one of claims 1 to 6, wherein the fibers consist of synthetic fibers.

11. Use as claimed in any one of claims 1 to 9, said metals being selected from the group consisting of lead, nickel, chromium, zinc, copper, gold, silver, iron.

12. Use as claimed in any one of claims 1 to 10, said radionuclides being selected from the group consisting of uranium, plutonium, palladium, americium.
